# EUROPEAN PATENT SPECIFICATION

(11) **EP 4 551 999 B1**
(45) Date of publication and mention of the grant of the patent: **01.04.2026**
(21) Application number: 22747986.2
(22) Date of filing: 06.07.2022
(51) Int. Cl.: G05B 23/02

(54) **DETECTING AN ANOMALY IN A MANUFACTURING PROCESS**
ERKENNUNG EINER ANOMALIE IN EINEM HERSTELLUNGSPROZESS
DÉTECTION D'UNE ANOMALIE DANS UN PROCESSUS DE FABRICATION

(43) Date of publication of application: 14.05.2025
(73) Proprietor: ABB SCHWEIZ AG, 5400 Baden (CH)
(72) Inventor: MINAGAWA, Taisuke, 08005 Barcelona (ES); VILACOBA, Diego, 08192 Sant Quirte Del Vallés, Barcelona (ES); AMIHAI, Ido, 64646 Heppenheim (DE); HOFFMANN, Martin Wolfgang, 68305 Mannheim (DE); KLOEPPER, Benjamin, 68199 Mannheim (DE); SCHMIDT, Benedikt, 69117 Heidelberg (DE)
(74) Representative: Maiwald GmbH
(86) International application number: PCT/EP2022/068797
(87) International publication number: WO 2024/008288

(56) References cited:
- US-A1- 2014 039 834
- US-A1- 2019 219 981
- US-B1- 11 080 127

## Description

### Field of the Invention

The invention relates to the field of manufacturing process, particularly in an industrial plant, and to detecting an anomaly in the manufacturing process and/or the plant. The invention further relates to a program element, to a computer-readable storage medium and to a computing system.

### Background

Today's plants and/or manufacturing processes may comprise complex subsystems, machines, sensors, actuators and/or sub-processes. Hence, in at least some plants, a measurement of, e.g., an overall equipment effectiveness (OEE) and/or of KPIs (Key Performance Indicators) for quality assurance (QA) is performed. To get these values may be particularly complex and/or difficult when (many) IIoT devices (IIoT: industrial internet of things) are used in the process. Hence, a method for detecting an anomaly in said process is useful to cope with its complexity and/or to recognize malfunctions and/or possible damages.

Document US 2019 219 981 A1 relates to a method for anomaly detection in a manufacturing system.

Document US 11,080,127 B1 relates to a system for identifying anomalies in actual time series data from multiple sources.

Document US 2014 039 834 A1 relates to an equipment-condition monitoring method for detecting an anomaly at an early time on the basis of multi-dimensional time-series data output from a plant or equipment.

### Description

It is an objective of the invention to provide a method for detecting an anomaly in a process, particularly in an industrial manufacturing process. This objective is achieved by the subject-matter of the independent claims. Further embodiments are evident from the dependent claims and the following description.

One aspect relates to a computer-implemented method for detecting an anomaly of at least one device in a manufacturing process, as defined in claim 1.

In an industrial plant and/or manufacturing process, in many cases there is a huge amount of data collected for checking and/or controlling an overall equipment effectiveness (OEE) and/or of KPIs (Key Performance Indicators) for quality assurance (QA) of the plant and/or process. To get insights in the plant's subsystems, machines, sensors, actuators and/or sub-processes, a complexity reduction is useful. One approach of a complexity reduction is to structure the plant and/or process in a hierarchical way, e.g. by using one or more hierarchical tree(s), in order to create a top-down view for dealing efficiently with OEE/QA issues, and the devices (etc.) affecting them. As an example, a data set from a setup of one cell with three robots could result in over 300 variables. Hence, creation of KPIs may require a considerable effort for a user and/or operator of the plant to identify which variables are relevant and/or which of them may be an indicator of a malfunction.

For this method, firstly a basis with "historic" values is built, e.g. during a "normal" run of the plant. Thus, a time-series of a plurality of historic process variables is obtained within a predefined time span. The start, end, and/or duration of said time span may be determined by experts and/or selected - e.g. by experts and/or automated tools - from "historic" runs. The term "historic" designates older runs, e.g. runs that took place, e.g., one minute, hour, day, week, month, etc. before a current run (sometimes called "productive run") of the plant and/or process. The "historic" runs may comprise particularly runs of a very quality, and/or runs that are considered as "usual" for said plant. The historic process variables may be obtained by any kind of sensors. The historic process variables may include summed-up values, e.g. a current of a complete subsystem, and/or inputs by an operator. There may be embodiments of the method that neglect a part of the historic process variables, e.g. historic process variables that are constant during the predefined time period. The result of the obtaining - and, optionally, the optimization - may be a so-called "base list".

Said "base list" may be used as a basis for determining, for each process variable of the plurality of the historic process variables, a cycle time of the process variable. Examples of a cycle time may be a duration of a rotation of a motor shaft, a distance between two "opening valves" moments, and other periodic events. For periodic events with a plurality of harmonics, the duration (i.e. the inverse) of the basis frequency may be considered as its cycle time. The result of the determining step is a list of historic process variables with individual cycle times. There may be embodiments of the method that get rid of variables whose cycle time is longer than the predefined time span. There may be embodiments where acyclic times are highlighted, e.g. times (and/or the related variables) that are not related to production, such as periodic maintenance, equipment recovery processes, e.g. cleaning of equipment, calibration, etc. For determining the cycle time of the process variable, one or more methods may be used. Examples may comprise algorithmic methods like comparison methods, evaluating an FFT (fast Fourier transform) of the variable, and/or using a trained ANN (Artificial Neural Network).

The plurality (or list) of the historic process variables can, then, be clustered into a plurality of clusters, wherein the process variables of a cluster have the same cycle time. The clustering may be done by, e.g., by a sorting algorithm, and/or by using distance measures, e.g. dynamic time warping, Levenshtein distance after SAX transformation, or Eucledian on a subset of extracted or engineered features or variable-subsets. For arranging the plurality of clusters to a hierarchical tree, either "agglomerative" ("bottom-up", i.e. clusters are merged in direction up the tree) or "divisive" ("top-down", i.e. a recursive split down the tree) approaches may be used. The result of the clustering may be a hierarchical tree ("dendrogram") of the clusters, e.g. according to their similarity. In other words, the tree is based on the cycle time of the clusters, for example according to the similarity of the cycle time of the clusters. The hierarchical tree, based on the cycle time of the clusters, may be stored in a database. This hierarchical tree may be a method to find out a hierarchical order of the subsystems of the plant and/or the process. At least for some applications, gaining said hierarchical tree may already be beneficial, e.g. for getting insights into the structure of the plant. Furthermore, the hierarchical tree may be used for the anomaly detection.

In a current run (or "productive run") of the plant and/or process, a time-series of a plurality of current process variables is obtained, the current process variables corresponding to the historic process variables. "Corresponding" may mean that process variables with the same designation are compared, e.g. "RPM of motor #15", and/or the time-series that have the same or similar values. The definition of "similar" may depend on several factors, e.g. precision of measurement, tolerances of the devices, tolerable values ranges, and/or others. Based on the comparison of the current process variables with the historic process variables, the anomaly of the at least one device can be detected, wherein the anomaly is defined by identifying a cycle time of a current process variable that is significantly different to the cycle time of a corresponding historic variable.

The detecting may be used as a basis for subsequent actions, e.g. for outputting the anomaly, so that an expert can repair or start a maintenance of the device with the detected anomaly. Optionally, algorithms may be used that pick up process cycles automatically and visualize process cycles/sub-cycles. Additionally or as an alternative, the detecting may be used to change control of the device, e.g. reduce the maximum allowed rotational speed and/or current, etc., of an electric motor. Additionally or as an alternative, the detecting may be used to stop a subsystem. Additionally or as an alternative, the detecting may be used to control a redundancy strategy, e.g. to change a load distribution among subsystems that run a so-called "warm redundancy strategy". Additionally or as an alternative, the anomaly and/or a frequency and/or a severity of anomalies may be used for an OEE calculation of the industrial plant and/or process.

It may be useful to understand that it turned out that a variation of the cycle time may be caused by actions in sub-cycles - such as picking motion, in a welding process, inspection process, etc. -, which may require users to identify correct signals to map sub-cycles to variables. Identifying variables to map cycle/sub-cycles may be an efficient way to investigate root causes of problems such as process delays, and/or defects or decay in certain devices and/or subsystems.

In various embodiments, the method further comprises the step of: After the obtaining of historic process variables, removing a subset of process variables, wherein the values of the subset of process variables are constant during the predefined time span. Constant values may indicate that a certain device is not involved in and/or is not relevant for a sub-process.

In various embodiments, the method further comprises the step of: After determining the cycle time, if the cycle time of a process variable of the plurality of process variables is greater than the predefined time span, removing said process variable. A very long cycle time may, e.g., be caused by a maintenance pause, etc.

In various embodiments, the determining the cycle time comprises following steps: Calculating a covariance matrix from the plurality of the historic process variables. Selecting a first set from the historic process variables whose standard deviation is above a first threshold. Selecting a second set from the first set of historic process variables whose squared correlation value is below a second threshold. Determining the cycle time.

The calculating step may be done only for continuous variables and/or non-binary variables. For categorical variables, a contingency table could be constructed, and variables could be removed based on the strength of their association with other categorical variables using statistical measures, e.g. Cramer's V. Selecting a second set may be performed by using dimensionality reduction techniques, e.g. principal component analysis, to reduce the data space. Selecting a second set may, additionally or as an alternative, be performed by low/high pass filtering to remove noisy frequencies from the data and subsequently perform an inverse Fourier transform. Determining the cycle time may be done by using supervised learning algorithms for an ANN on labelled historical data.

According to the invention, the arranging the plurality of clusters to a hierarchical tree comprises a classification of the clusters, particularly by a classification tree, a logistic regression, a support vector classifier, and/or an artificial neural network.

In various embodiments, the method further comprises the step of: Before or after storing the hierarchical tree, visualizing the hierarchical tree. This may advantageously provide an intuitive insight into a structure of a complex plant and/or manufacturing process.

In various embodiments, the method further comprises the step of: After detecting the anomaly, outputting the anomaly. Additionally or as an alternative, further actions may be taken to control the manufacturing process, based on detecting the anomaly.

An aspect relates to a program element for executing the method described above and/or below, when running the program element on a processing unit.

An aspect relates to a computer-readable storage medium where a computer program or a computer program product as described above is stored on.

An aspect relates to a computing system, configured for executing the method as described above and/or below.

For further clarification, the invention is described by means of embodiments shown in the figures. These embodiments are to be considered as examples only, but not as limiting.

### Brief Description of the Drawings

The drawings depict:
- **Fig. 1**: schematically an example of a relationship between values of a device and an anomaly of this device, according to an embodiment;
- **Fig. 2a** and **2b**: schematically an example of a clustering and an arranging the clusters to a hierarchical tree, according to an embodiment;
- **Fig. 3a** and **3b**: schematically an example of historic process variables and current process variables, according to an embodiment;
- **Fig. 4**: schematically an example of anomalies of current process variables obtained in several runs, according to an embodiment;
- **Fig. 5**: schematically a sketch of the anomaly detection, according to an embodiment;
- **Fig. 6**: a flow diagram according to an embodiment;
- **Fig. 7**: schematically a sketch of the anomaly detection, according to an embodiment.

### Detailed Description of Embodiments

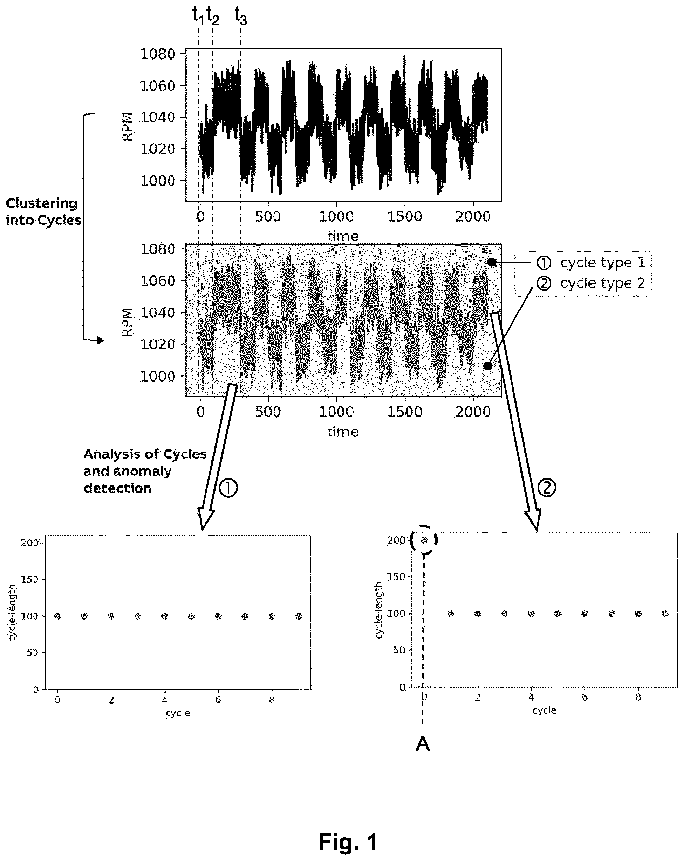

**Fig. 1** shows schematically an example of a relationship between values of a device - here: of an electric motor - and an anomaly of this device. As can be seen in the upmost diagram of **Fig. 1****,** the RPM-values of the electric motor differ in different timeperiods. To provide an example, three points in time are marked, i.e. t₁ to t₃. It is clearly visible that the motor operates between t₁ and t₂, and between t₂ and t₃, in a different operation mode, respectively. In the following time span, the operation modes alternate analogously. In the different operation modes, also the cycle times differ. After clustering this process variable, two cycle types can be recognized, i.e. "cycle type 1" and "cycle type 2"; see the middle diagram of **Fig. 1****.** The clustering step separates the values into values of "cycle type 1" (diagram bottom, left) and of "cycle type 2" (diagram bottom, right). After this clustering, the anomaly "A" can be recognized, in the "cycle type 2".

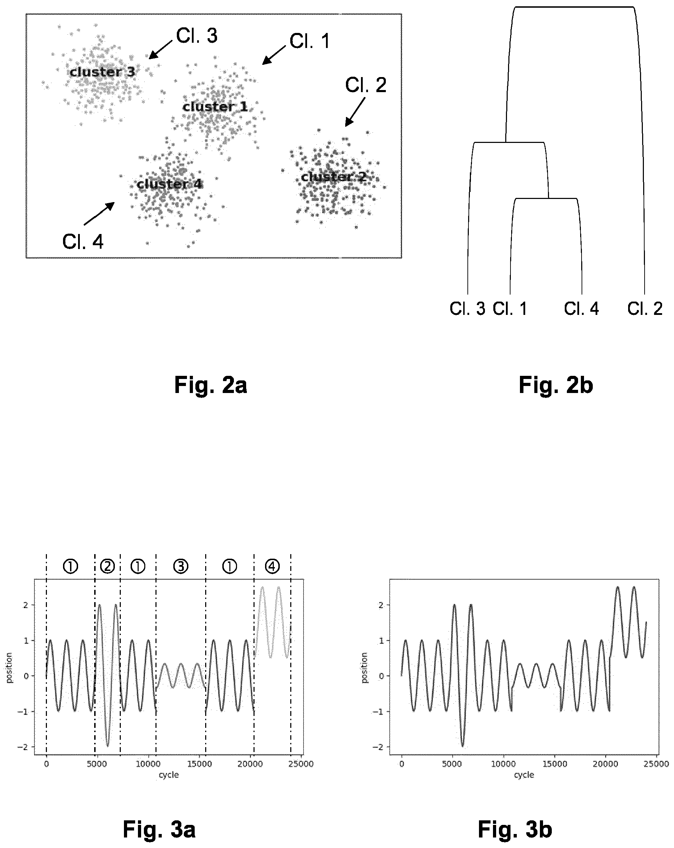

**Fig. 2a** shows schematically an example of a clustering, and **Fig. 2b** shows an arranging of the clusters to a hierarchical tree. The four clusters "Cl. 1" to "Cl. 4" have been clustered according to their xy-values, e.g. by using clustering methods as described above. It is intuitively visible that dot-clouds "Cl. 1" and "Cl. 4" are the closest ones, then "Cl. 3" and, then, "Cl. 2". An ordering according to this proximity measure is reflected and depicted in the hierarchical tree of **Fig. 2b****.**

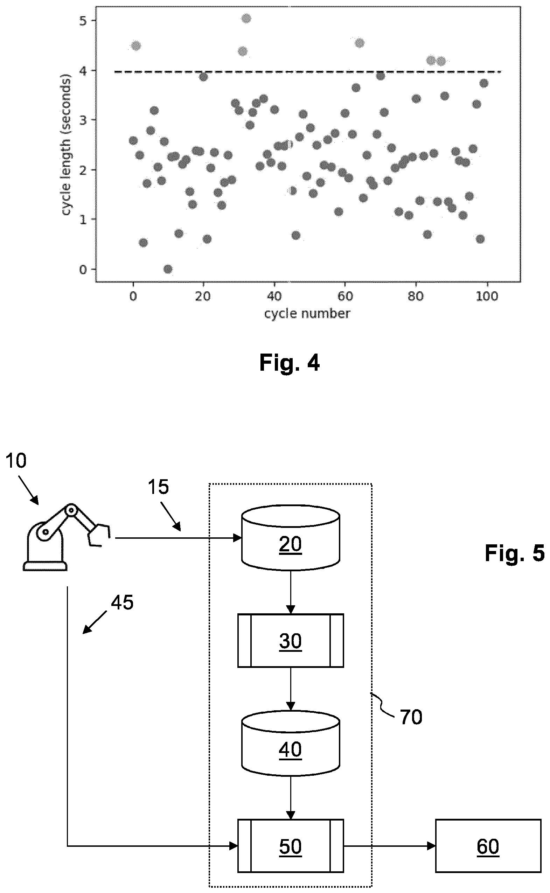

**Fig. 3a** shows schematically an example of historic process variables, and **Fig. 2b** shows current process variables. The historic process variables of **Fig. 3a** are clustered, as described above, into cycle types 1 to 4. The values of **Fig. 3a** may related to the clusters of **Fig. 2a****.** It can be seen that the clustering enables or at least eases the recognizing of anomalies. **Fig. 4** shows schematically an example of anomalies of current process variables obtained in several runs, according to an embodiment. The anomalies are defined by exceeding a predefined cycle length threshold, e.g. 4 seconds, as shown in **Fig. 4****.** Each anomaly may be marked, e.g., with a time stamp, so that the device's current quality may be evaluated and/or effects like decay can be detected.

**Fig. 5** shows schematically a sketch of the anomaly detection. Values of a device 10 may be obtained (see line 15) and fed into a database comprising the obtained values as historic process variables 20. After some processing - which may include determining a cycle time of each process variable and clustering them - by a computing sub-device or program 30, a hierarchical tree 40 is stored, the hierarchy based on the cycle time of the clusters. During a productive run, current process variables may be obtained (see line 45) and used, by a further computing sub-device or program 50 and along with the stored hierarchical tree 40, for detecting the anomaly of the at least one device 10. The result may be output to a display 60. Additionally or as an alternative, further actions may be taken, e.g. as described above. A computing system 70 may comprise the historic process variables 20 and/or storage means for them, the computing sub-device or program 30, the hierarchical tree 40 and/or storage means for them, and the further computing sub-device or program 50. Optionally, the display 60 and/or further devices and/or sub-devices or programs may be part of the computing system 70. The computing system 70 may run in the plant, close to it, and/or connected via a network to the plant.

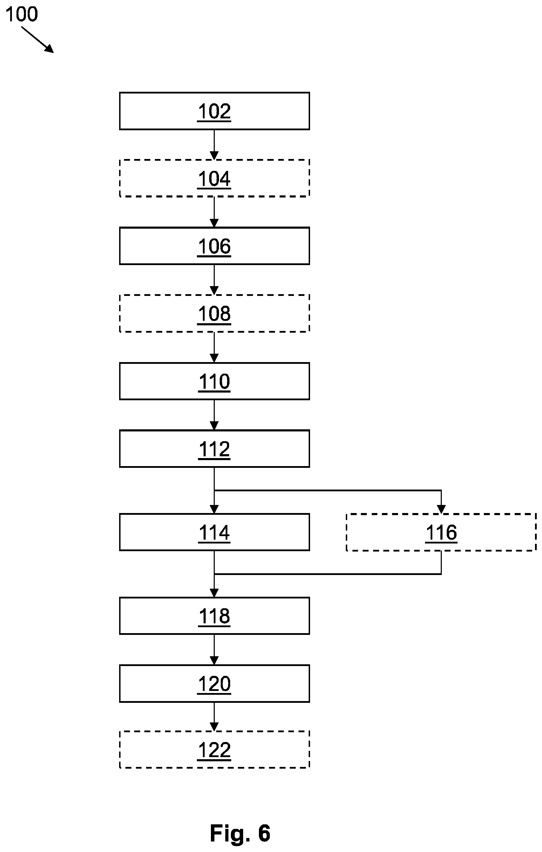

**Fig. 6** shows a flow diagram 100 of a computer-implemented method for detecting an anomaly of at least one device 10 (see, e.g., **Fig. 5**) in a manufacturing process and/or a plant. In a step 102, a time-series of a plurality of historic process variables 20 within a predefined time span is obtained. In an optional step 104, a subset of process variables is removed, wherein the values of the subset of process variables are constant during the predefined time span. In a step 106, for each process variable of the plurality of the historic process variables 20, a cycle time of the process variable is determined. In an optional step 108, if the cycle time of a process variable of the plurality of process variables is greater than the predefined time span, said process variable is removed. In a step 110, the plurality of process variables is clustered into a plurality of clusters, wherein the process variables of a cluster have the same cycle time. In a step 112, the plurality of clusters is arranged to a hierarchical tree 40, the tree being based on the cycle time of the clusters. In a step 114, the hierarchical tree 40 is stored. In an optional step 116, the hierarchical tree 40 is visualized. In a step 118, a time-series of a plurality of current process variables is obtained, which correspond to the historic process variables 20. In a step 120, the anomaly of the at least one device 10 is detected, wherein the anomaly is defined by identifying a cycle time of a current process variable that is longer than the cycle time of a corresponding historic variable. In an optional step 122, the anomaly is output, e.g. on a display 60.

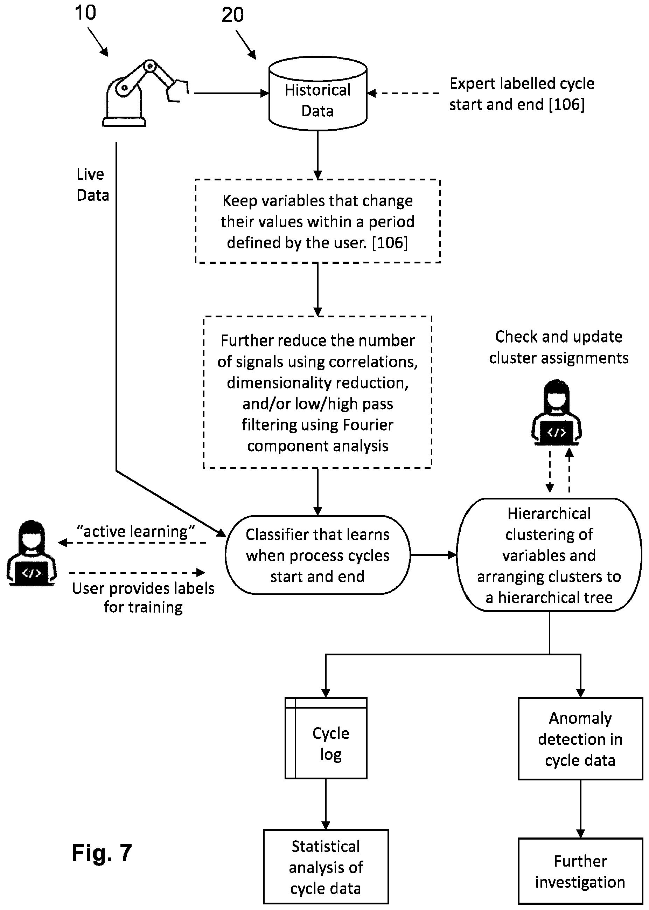

**Fig. 7** shows schematically a sketch of the anomaly detection, according to an embodiment. Values of a device 10 may be obtained and fed into a database comprising the obtained values as historic process variables 20. Optionally, a subset of process variables is removed, wherein the values of the subset of process variables are constant during the predefined time span, thus keeping only variables that change their values within the predefined time span. Additionally or as an alternative, the number of signals may be (further) reduced, e.g. by using correlations, dimensionality reduction, and/or low/high pass filtering using Fourier component analysis. Then, live data may be obtained from device 10, and a classifier (and/or other methods) may be used for hierarchical clustering of the variables and/or for arranging clusters to a hierarchical tree 40. Optionally, the classifier may learn when process cycles start and end. This may be done by an "active learning" process, which may use an ANN. The training may be supported by user-provided labels. Further optionally, the hierarchical cluster assignments may be checked and/or and updated, e.g. by a supervising person and/or in an automated way. The hierarchical tree 40 may serve as a basis for the anomaly detection (and/or for a further problem detection) in the cycle data. Further investigation and/or actions may follow, based on the anomaly detection. Additionally or as an alternative, the hierarchical tree 40 may be stored, e.g. as a cycle log, which may further be used, e.g., for a statistical analysis of cycle data.

### List of Reference Symbols

- 10: device
- 15: line
- 20: historic process variables
- 30: first sub-program
- 40: hierarchical tree
- 45: line
- 50: second sub-program
- 60: display
- 70: computing system
- 100: flow diagram
- 102 - 122: steps

## Claims

1. A computer-implemented method for detecting an anomaly of at least one device (10) in a manufacturing process, the method comprising the steps of:
obtaining a time-series of a plurality of historic process variables (20) within a predefined time span;
**characterized in that** the method further comprises the steps of:
determining, for each historic process variable of the plurality of the historic process variables (20), a cycle time of the historic process variable;
clustering the plurality of historic process variables into a plurality of clusters, wherein the historic process variables of a cluster have a similar cycle time;
arranging the plurality of clusters to a hierarchical tree (40), the tree being based on the cycle time of the clusters, according to the similarity of the cycle time of the clusters,
wherein the arranging the plurality of clusters to a hierarchical tree (40) comprises a classification of the clusters by a classification tree, a logistic regression, a support vector classifier, and/or an artificial neural network;
storing the hierarchical tree (40);
obtaining a time-series of a plurality of current process variables, which correspond to the historic process variables (20); and
detecting the anomaly of the at least one device (10) based on the hierarchical tree (40), wherein the anomaly is defined by identifying a cycle time of the current process variable that is longer than the cycle time of the cluster containing the corresponding historic process variable.

2. The method of claim 1, further comprising the step of:
after the obtaining of historic process variables (20), removing a subset of process variables, wherein the values of the subset of process variables are constant during the predefined time span.

3. The method of claim 1 or 2, further comprising the step of:
after determining the cycle time, if the cycle time of a process variable of the plurality of process variables is greater than the predefined time span, removing said process variable.

4. The method of any one of the preceding claims,
wherein the determining the cycle time comprises following steps:
calculating a covariance matrix from the plurality of the historic process variables (20);
selecting a first set from the historic process variables (20) whose standard deviation is above a first threshold;
selecting a second set from the first set of historic process variables (20) whose squared correlation value is below a second threshold;
optionally, computing a contingency table for categorical variables;
optionally, removing categorical variables whose association with other categorical variables is above a certain threshold, particularly using Cramer's V; and
determining the cycle time.

5. The method of any one of the preceding claims, further comprising the step of:
before or after storing the hierarchical tree (40), visualizing the hierarchical tree (40).

6. The method of any one of the preceding claims, further comprising the step of:
after detecting the anomaly, outputting the anomaly.

7. A program element for executing the method of any one of claims 1 to 6, when running the program element on a processing unit.

8. A computer-readable storage medium where a computer program according to claim 7 is stored on.

9. A computing system (70), configured for executing the method of any one of claims 1 to 6.

## Patentansprüche

1. Computerimplementiertes Verfahren zum Erkennen einer Anomalie mindestens eines Geräts (10) in einem Fertigungsprozess, wobei das Verfahren folgende Schritte umfasst:
erhalten einer Zeitreihe einer Vielzahl historischer Prozessvariablen (20) innerhalb eines vordefinierten Zeitraums;
**dadurch gekennzeichnet, dass** das Verfahren ferner die folgenden Schritte umfasst:
bestimmen, für jede historische Prozessvariable der Vielzahl historischer Prozessvariablen (20), einer Zykluszeit der historischen Prozessvariablen;
clustern der Vielzahl historischer Prozessvariablen in eine Vielzahl von Clustern, wobei die historischen Prozessvariablen eines Clusters eine ähnliche Zykluszeit aufweisen;
anordnen der Vielzahl von Clustern zu einem hierarchischen Baum (40), wobei der Baum auf der Zykluszeit der Cluster basiert, entsprechend der Ähnlichkeit der Zykluszeit der Cluster,
wobei das Anordnen der Vielzahl von Clustern zu einem hierarchischen Baum (40) eine Klassifizierung der Cluster durch einen Klassifikationsbaum, eine logistische Regression, einen Support-Vektor-Klassifikator und/oder ein künstliches neuronales Netzwerk umfasst;
speichern des hierarchischen Baums (40);
erhalten einer Zeitreihe einer Vielzahl von aktuellen Prozessvariablen, die den historischen Prozessvariablen (20) entsprechen; und
erkennen der Anomalie der mindestens einen Vorrichtung (10) auf der Grundlage des hierarchischen Baums (40), wobei die Anomalie durch Identifizieren einer Zykluszeit der aktuellen Prozessvariablen definiert wird, die länger ist als die Zykluszeit des Clusters, der die entsprechende historische Prozessvariable enthält.

2. Verfahren nach Anspruch 1, weiterhin umfassend folgenden Schritt:
nach dem Erhalten historischer Prozessvariablen (20), entfernen einer Teilmenge von Prozessvariablen, wobei die Werte der Teilmenge von Prozessvariablen während der vordefinierten Zeitspanne konstant sind.

3. Verfahren nach Anspruch 1 oder 2, weiterhin umfassend folgenden Schritt:
nach dem Bestimmen der Zykluszeit, wenn die Zykluszeit einer Prozessvariablen der mehreren Prozessvariablen größer als die vordefinierte Zeitspanne ist, entfernen dieser Prozessvariablen.

4. Verfahren nach einem der vorstehenden Ansprüche, wobei das Bestimmen der Zykluszeit die folgenden Schritte umfasst:
berechnen einer Kovarianzmatrix aus der Vielzahl der historischen Prozessvariablen (20);
auswählen eines ersten Satzes aus den historischen Prozessvariablen (20), deren Standardabweichung über einem ersten Schwellenwert liegt;
auswählen eines zweiten Satzes aus dem ersten Satz historischer Prozessvariablen (20), deren quadratischer Korrelationswert unter einem zweiten Schwellenwert liegt;
optional, berechnen einer Kontingenztafel für kategoriale Variablen;
optional, entfernen kategorialer Variablen, deren Assoziation mit anderen kategorialen Variablen über einem bestimmten Schwellenwert liegt, insbesondere unter Verwendung von Cramer's V; und
Bestimmen der Zykluszeit.

5. Das Verfahren nach einem der vorstehenden Ansprüche, weiterhin umfassend folgenden Schritt:
vor oder nach dem Speichern des hierarchischen Baums (40) das Visualisieren des hierarchischen Baums (40).

6. Das Verfahren nach einem der vorstehenden Ansprüche, das ferner den folgenden Schritt umfasst:
nach dem Erkennen der Anomalie, ausgeben der Anomalie.

7. Programmelement zum Ausführen des Verfahrens nach einem der Ansprüche 1 bis 6, wenn das Programmelement auf einer Verarbeitungseinheit ausgeführt wird.

8. Computerlesbares Speichermedium, auf dem ein Computerprogramm gemäß Anspruch 7 gespeichert ist.

9. Computersystem (70), das zum Ausführen des Verfahrens nach einem der Ansprüche 1 bis 6 eingerichtet ist.

## Revendications

1. Procédé mis en œuvre par ordinateur pour détecter une anomalie d'au moins un dispositif (10) dans un processus de fabrication, le procédé comprenant l'étape suivante :
l'obtention d'une série temporelle d'une pluralité de variables de processus historiques (20) dans les limites d'un intervalle de temps prédéfini ;
**caractérisé en ce que** le procédé comprend en outre les étapes suivantes :
la détermination, pour chaque variable de processus historique de la pluralité des variables de processus historiques (20), d'un temps de cycle de la variable de processus historique ;
le groupement de la pluralité de variables de processus historiques en une pluralité de groupes, dans lequel les variables de processus historiques d'un groupe ont un temps de cycle similaire ;
l'agencement de la pluralité de groupes dans un arbre hiérarchique (40), l'arbre étant basé sur le temps de cycle des groupes, selon la similarité du temps de cycle des groupes,
dans lequel l'agencement de la pluralité de groupes dans un arbre hiérarchique (40) comprend une classification des groupes par un arbre de classification, une régression logistique, un classifieur à vecteurs de support, et/ou un réseau neuronal artificiel ;
le stockage de l'arbre hiérarchique (40) ;
l'obtention d'une série temporelle d'une pluralité de variables de processus actuelles, qui correspondent aux variables de processus historiques (20) ; et
la détection de l'anomalie de l'au moins un dispositif (10) sur la base de l'arbre hiérarchique (40), dans lequel l'anomalie est définie en identifiant un temps de cycle de la variable de processus actuelle qui est plus long que le temps de cycle du groupe contenant la variable de processus historique correspondante.

2. Procédé de la revendication 1, comprenant en outre l'étape suivante :
après l'obtention de variables de processus historiques (20), l'élimination d'un sous-ensemble de variables de processus, dans lequel les valeurs du sous-ensemble de variables de processus sont constantes durant l'intervalle de temps prédéfini.

3. Procédé de la revendication 1 ou 2, comprenant en outre l'étape suivante :
après la détermination du temps de cycle, si le temps de cycle d'une variable de processus de la pluralité de variables de processus est plus grand que l'intervalle de temps prédéfini, l'élimination de ladite variable de processus.

4. Procédé de l'une quelconque des revendications précédentes,
dans lequel la détermination du temps de cycle comprend les étapes suivantes :
le calcul d'une matrice de covariance à partir de la pluralité des variables de processus historiques (20) ;
la sélection d'un premier ensemble à partir des variables de processus historiques (20) dont l'écart type est au-dessus d'un premier seuil ;
la sélection d'un second ensemble à partir du premier ensemble de variables de processus historiques (20) dont la valeur de corrélation au carré est en dessous d'un second seuil ;
facultativement, la computation d'une table de contingence pour des variables catégoriques ;
facultativement, l'élimination de variables catégoriques dont l'association à d'autres variables catégoriques est au-dessus d'un certain seuil, particulièrement en utilisant le V de Cramer ; et
la détermination du temps de cycle.

5. Procédé de l'une quelconque des revendications précédentes, comprenant en outre l'étape de :
avant ou après le stockage de l'arbre hiérarchique (40), la visualisation de l'arbre hiérarchique (40).

6. Procédé de l'une quelconque des revendications précédentes, comprenant en outre l'étape de :
après la détection de l'anomalie, la sortie de l'anomalie.

7. Élément de programme pour exécuter le procédé de l'une quelconque des revendications 1 à 6, lors de l'exploitation de l'élément de programme sur une unité de traitement.

8. Support de stockage lisible par ordinateur, sur lequel est stocké un programme d'ordinateur selon la revendication 7.

9. Système informatique (70), configuré pour exécuter le procédé de l'une quelconque des revendications 1 à 6.
